# EUROPÄISCHE PATENTSCHRIFT

(11) **EP 2 297 808 B1**
(45) Veröffentlichungstag und Bekanntmachung des Hinweises auf die Patenterteilung: **26.02.2014**
(21) Anmeldenummer: 09777071.3
(22) Anmeldetag: 09.07.2009
(51) Int. Cl.: H01M 8/02, H01M 8/24, H01M 8/04, H01M 8/10

(54) **BIPOLARPLATTE FÜR EINE BRENNSTOFFZELLENANORDNUNG, INSBESONDERE ZUR ANORDNUNG, ZWISCHEN ZWEI BENACHBARTEN MEMBRAN-ELEKTRODEN-ANORDNUNGEN**
BIPOLAR PLATE FOR A FUEL CELL ARRANGEMENT, IN PARTICULAR FOR PLACEMENT BETWEEN TWO ADJACENT MEMBRANE ELECTRODE ARRANGEMENTS
PLAQUE BIPOLAIRE POUR UN AGENCEMENT DE PILES À COMBUSTIBLE, EN PARTICULIER POUR L AGENCEMENT ENTRE DEUX AGENCEMENTS D ÉLECTRODES À MEMBRANES VOISINS

(30) Priorität: 15.07.2008 DE 102008033211
(43) Veröffentlichungstag der Anmeldung: 23.03.2011
(73) Patentinhaber: Daimler AG, 70327 Stuttgart (DE)
(72) Erfinder: KLEEMANN, Jörg, 89073 Ulm (DE); SCHUDY, Markus, 64646 Heppenheim (DE); BLANK, Felix, 78465 Konstanz (DE); FINSTERWALDER, Florian, 89171 Illerkirchberg (DE)
(74) Vertreter: JENSEN & SON
(86) Internationale Anmeldenummer: PCT/EP2009/004985
(87) Internationale Veröffentlichungsnummer: WO 2010/006730

(56) Entgegenhaltungen:
- EP-A- 1 840 994
- DE-A1-102005 037 093
- DE-A1-102006 010 832
- US-A1- 2003 077 501
- US-A1- 2003 108 782
- US-A1- 2004 209 152

## Beschreibung

Die Erfindung betrifft eine Brennstoffzellen-Bipolarplatte, insbesondere zur Anordnung zwischen zwei benachbarten Membran-Elektroden-Anordnungen in einem Brennstoffzellenstapel gemäß den Merkmalen des Oberbegriffs des Anspruchs 1 sowie eine Brennstoffzellenanordnung gemäß den Merkmalen des Oberbegriffs des Anspruchs 8.

Eine Brennstoffzellenanordnung oder ein Brennstoffzellenstapel (auch kurz Stack genannt) besteht aus mehreren, elektrisch in Serie geschalteten, planparallel übereinander gestapelt angeordneten Brennstoffzellen. Jede Brennstoffzelle weist als Elektroden in Form von Gasdiffusionselektroden eine Anode, eine Kathode und einen dazwischen angeordneten Elektrolyt auf, beispielsweise in Form einer Polymer-Elektrolyt-Membran (kurz PEM bezeichnet), die zusammen eine Membran-Elektroden-Anordnung (kurz MEA bezeichnet) bilden.

Zwischen den im Brennstoffzellenstapel benachbarten Membran-Elektroden-Anordnungen ist jeweils eine Brennstoffzellen-Bipolarplatte (auch Bipolar-Separatorplatteneinheit genannt) angeordnet. Die Brennstoffzellen-Bipolarplatte dient dabei der Beabstandung benachbarter Membran-Elektroden-Anordnungen, dem Verteilen von Reaktionsstoffen für die Brennstoffzelle wie Brennstoff und Oxidationsmittel über die angrenzenden Membran-Elektroden-Anordnungen und dem Abführen der Reaktionsstoffe in hierfür vorgesehenen, jeweils zu den Membran-Elektroden-Anordnungen hin offenen Kanälen, der Abfuhr der Reaktionswärme über ein in separaten Kühlmittelkanälen geführtes Kühlmittel sowie der Herstellung einer elektrischen Verbindung zwischen der Anode und der Kathode von benachbarten Membran-Elektroden-Anordnungen.

Als Reaktionsstoffe werden ein Brennstoff und ein Oxidationsmittel eingesetzt. Meist werden gasförmige Reaktionsstoffe (kurz: Reaktionsgase) eingesetzt, z. B. Wasserstoff oder ein Wasserstoff enthaltenes Gas (z. B. Reformatgas) als Brennstoff und Sauerstoff oder ein Sauerstoff enthaltenes Gas (z. B. Luft) als Oxidationsmittel. Unter Reaktionsstoffe werden alle an der elektrochemischen Reaktion beteiligten Stoffe verstanden, einschließlich der Reaktionsprodukte, wie z. B. Wasser oder abgereicherter Brennstoff.

Die jeweilige Brennstoffzellen-Bipolarplatte besteht dabei aus einem Formteil, vorzugsweise jedoch aus zwei oder mehr planparallel miteinander verbundenen Formteilen, insbesondere Platten - einer Anodenplatte zur Verbindung mit der Anode der einen Membran-Elektroden-Anordnung und einer Kathodenplatte zur Verbindung mit der Kathode der anderen Membran-Elektroden-Anordnung - oder einer Platte mit ober- und unterseitig eingebrachten Kanalstrukturen. An der der einen Membran-Elektroden-Anordnung zugewandten Oberfläche der Anodenplatte sind dabei Anodenkanäle zur Verteilung eines Brennstoffs entlang der einen Membran-Elektroden-Anordnung angeordnet, wobei an der der anderen Membran-Elektroden-Anordnung zugewandten Oberfläche der Kathodenplatte Kathodenkanäle zur Verteilung des Oxidationsmittels über der anderen Membran-Elektroden-Anordnung angeordnet sind. Die Kathodenkanäle und die Anodenkanäle haben keine Verbindung miteinander.

Die Kathoden- und Anodenkanäle werden dabei von durch Erhebungen (im Weiteren Stege genannt) voneinander getrennten Vertiefungen (im Weiteren Kanäle genannt) auf den jeweils den Membran-Elektroden-Anordnungen zugewandten Oberflächen der Anoden- und Kathodenplatte gebildet. Die Kathoden- und Anodenplatte sind vorzugsweise geformt, insbesondere hohl geprägt. Die Stege und Kanäle werden beispielsweise diskontinuierlich durch Hohlprägen (mit Form und Stempel), Hydroforming (mit Form und Flüssigkeit), Hochgeschwindigkeitsumformen (mit Form und Stempel), Formrecken, Tiefziehen, Fließpressen oder dergleichen, oder kontinuierlich durch Walzen oder Ziehen hergestellt.

Um bei einer Verwendung einer Brennstoffzellenanordnung für ein Fahrzeug im Betrieb eine hinreichende Wirtschaftlichkeit und geringe Kosten zu erzielen, sind einerseits die Leistung pro Quadratmeter Zellfläche und der Wirkungsgrad der Brennstoffzelle zu steigern, indem beispielsweise Leistungsverluste infolge von Kontakt- und/oder Materialwiderständen reduziert sowie Stoff- und Ladungstransport verbessert werden. Andererseits werden zunehmend kostengünstige Materialien, wie z. B. rollbare Elektrodenlagen für die Gasdiffusionselektroden, verwendet.

Die deutsche Patentanmeldung DE 102005037093 A1 offenbart eine PEM-Brennstoffzelle, welche eine Membran-Elektroden-Anordnung umfasst, die zwischen zwei Separatorplatteneinheiten angeordnet ist. Die PEM-Brennstoffzellen werden übereinander gestapelt, so dass eine Brennstoffzellenanordnung entsteht. Die Separatorplatteneinheiten umfassen je ein Strömungsfeld mit zwei oder mehr Kanälen, wobei die Kanäle durch Stege voneinander getrennt sind. Benachbarte Kanäle des Strömungsfeldes weisen sich gegenläufig ändernde Strömungsquerschnitte auf. Die Änderung der Strömungsquerschnitte kann beispielsweise durch eine Änderung der Kanalbreiten realisiert werden. Da benachbarte Kanäle wie zuvor beschrieben gegenläufig ändernde Strömungsquerschnitte aufweisen, weist zumindest die Hälfte der auf dem Strömungsfeld vorhandenen Kanäle entlang der Strömungsrichtung eines sich in den Kanälen bewegenden Fluids eine zunehmende Kanalbreite auf. Die Breite der Stege ist z.T. in Strömungsrichtung konstant.

Aus der DE 60212001 T2 ist eine Brennstoffzellenflüssigkeitsverteilungsplatte (auch Bipolarplatte genannt) bekannt, die auf wenigstens einer Fläche ein Netz von progressiv feineren Kanälen aufweist, die einen oder mehrere verzweigte Gaslieferungskanäle mit einer Vielzahl von daran angeschlossenen Gasdiffusionskanälen mit einer Breite geringer als 0,2 mm aufweisen.

Aus der US 20020167109 A1 ist eine herkömmliche Brennstoffzellen-Bipolarplatte und deren Herstellung beschrieben, wobei die Strömungskanäle unterschiedliche Kanalquerschnittsformen aufweisen.

Aus der US 20030059662 A1 ist eine herkömmliche Brennstoffzellen-Bipolarplatte bekannt, welche einen serpentinenartig verlaufenden Strömungskanal aufweist, wobei der Steg zwischen benachbarten Kanalabschnitten des Kanals in der Breite variiert.

Aus der US 6586128 B1 ist zur Verbesserung und Einstellung eines Stofftransports zwischen benachbarten Kanälen ein Verfahren und eine Vorrichtung bekannt, bei welcher Druckunterschiede in dem jeweiligen Kanal durch Änderung des Kanalverlaufs bei konstanter Stegbreite einstellbar sind.

Die europäische Patentanmeldung EP 1840994 A1 offenbart eine Brennstoffzellen-Bipolarplatte für eine PEM-Brennstoffzellenanordnung. Die PEM-Brennstoffzellenanordnung besteht aus mehreren aufeinander gestapelten Brennstoffzellen-Bipolarplatten und Membran-Elektroden-Anordnungen. Die Membran-Elektroden-Anordnungen bestehen aus einer Polymer-Elektrolyt-Membran, zwei Katalysatorschichten und zwei Gasdiffusionsschichten. Die Brennstoffzellen-Bipolarplatten umfassen ein Strömungsfeld mit einer Vielzahl von Kanälen, wobei sich der Querschnitt der Kanäle ausgehend von den auf dem Strömungsfeld befindlichen Fluideingängen in Richtung auf die ebenfalls auf dem Strömungsfeld befindlichen Fluidausgängen vergrößert. Diese Querschnittsvergrößerung wird über eine Vergrößerung der Kanalbreiten in Strömungsrichtung eines durch die Kanäle fließenden Fluids realisiert. Zudem werden die Breiten der Stege, die die einzelnen Kanäle voneinander trennen, in Strömungsrichtung eines durch die Kanäle fließenden Fluids kleiner.

Die amerikanische Patentanmeldung US 2003077501 A1 offenbart eine ähnliche Brennstoffzellen-Bipolarplatte und PEM-Brennstoffzellenanordnung wie die vorgenannten EP 1840994 A1. Zudem werden Gasdiffusionselektroden offenbart, die aus Kohlenstofftuch bestehen.

Die amerikanische Patentanmeldung US 2004209152 A1 offenbart eine Brennstoffzellen-Bipolarplatte für eine Brennstoffzellenanordnung, welche aus mehreren aufeinander gestapelten Brennstoffzellen besteht. Die Brennstoffzelle umfasst außerdem Gasdiffusionsschichten und eine Elektrolytmembran, die sich zwischen jeweils zwei der Bipolarplatten befinden. Die Brennstoffzellen-Bipolarplatten umfassen zudem Strömungskanäle, deren Breite sich in Strömungsrichtung eines durch die Kanäle strömenden Gases vergrößert. Der Kanalabstand zweier benachbarter Kanäle nimmt entlang der Strömungsrichtung zu.

Die deutsche Patentanmeldung DE 102006010832 A1 offenbart eine ähnliche Brennstoffzellen-Bipolarplatte für eine Brennstoffzellenanordnung wie die vorgenannte US 2004209152 A1, wobei allerdings die Kanäle in Strömungsrichtung kleiner werden. Zudem werden Metalle als geeignete Materialien für Bipolarplatten angegeben.

Die amerikanische Patentanmeldung US 2003108782 A1 zeigt eine weitere Brennstoffzellen-Bipolarplatte mit Kanalstruktur für eine Brennstoffzellenanordnung. Sie zeigt ferner einen gemeinsamen Fluideingang und einen gemeinsamen Fluidausgang für alle Kanäle.

Der Erfindung liegt die Aufgabe zugrunde, eine Brennstoffzellen-Bipolarplatte anzugeben, welche gegenüber den aus dem Stand der Technik bekannten Brennstoffzellen-Bipolarplatten verbessert ist und die eine Optimierung der Leistungsdichte einer Brennstoffzellenanordnung ermöglicht. Darüber hinaus ist eine verbesserte Brennstoffzellenanordnung anzugeben.

Die Aufgabe wird hinsichtlich der Brennstoffzellen-Bipolarplatte erfindungsgemäß gelöst durch die im Anspruch 1 angegebenen Merkmale. Hinsichtlich der Brennstoffzellenanordnung wird die Aufgabe erfindungsgemäß durch die im Anspruch 8 angegebenen Merkmale gelöst.

Vorteilhafte Weiterbildungen der Erfindung sind Gegenstand der Unteransprüche.

Die Brennstoffzellen-Bipolarplatte, insbesondere zur Anordnung zwischen zwei benachbarten Membran-Elektroden-Anordnungen in einem Brennstoffzellenstapel, umfasst in herkömmlicher Weise mindestens eine oder zwei planparallel zueinander angeordnete Platten, wobei zumindest auf deren Außenseiten jeweils ein Strömungsfeld durch in die Platte eingebrachte Kanalstrukturen mit mehreren zwischen einem Fluideingang und einen Fluidausgang verlaufenden Kanälen und zwischen zwei Kanälen verlaufenden Stegen gebildet ist. Die Kanäle und/oder die Stege auf mindestens einer der Außenseiten weisen entlang einer Strömungsrichtung eines Fluids zwischen Fluideingang und Fluidausgang zumindest eine variierende Kanalbreite, eine variierende Stegbreite und/oder einen variierenden Kanalabstand auf.

Bevorzugt variieren die Kanalbreite, Stegbreite und/oder Kanalabstände in Abhängigkeit von lokalen Anforderungen an Fluidtransport, Wärmetransport und/oder Ladungstransport auf mindestens einer der Medienseiten und somit einer Seite der Bipolarplatte, z. B. einer Anodenseiten oder Kathodenseite.

Durch eine derartige Optimierung von lokalen Stegbreiten, Kanalbreiten und/oder Kanalabständen des Strömungsfeldes entlang der Strömungsrichtung können eine Anpassung an lokale Bedingungen in den angrenzenden Brennstoffzellen und damit einhergehend eine Optimierung der Leistungsdichte einer Brennstoffzellenanordnung erzielt werden. Insbesondere bei einer Brennstoffzellenanordnung mit flexiblen Lagen von Gasdiffusionselektroden können somit unterschiedliche Anforderungen an den Fluid-, insbesondere Gastransport, wie auch unterschiedliche thermische und elektrische Leitfähigkeitsanforderungen durch entsprechende Variation einer der Breiten, der Kanalbreite und/oder der Stegbreite und/oder der Kanalabstände erfüllt und erreicht werden.

Durch eine derart variable Einstellung und Anpassung der Kanalstruktur an lokale Bedingungen können zudem flexible und kostengünstige Materialien, z. B. flexible, insbesondere rollbare Lagen für die Gasdiffusionselektroden, verwendet werden. Hierdurch ist eine kostenoptimierte und robuste sowie packungsdichte Brennstoffzellenanordnung ermöglicht.

In einer möglichen Ausführungsform weisen die Kanäle entlang der Strömungsrichtung zwischen Fluideingang und Fluidausgang eine zunehmende Kanalbreite auf. Hierdurch ist ein optimierter Stoff- oder Fluidtransport von und zur Katalysatorschicht ermöglicht.

In einer weiteren alternativen oder zusätzlichen möglichen Ausführungsform weisen die Stege entlang der Strömungsrichtung zwischen Fluideingang und Fluidausgang eine abnehmende Stegbreite auf. Hierdurch ist ein verbesserter Ladungs- und Wärmetransport ermöglicht.

Alternativ oder zusätzlich kann der Kanalabstand zwischen zwei nebeneinander angeordneten Kanälen entlang der Strömungsrichtung zunehmen. Dabei wird im Sinne der Erfindung unter einem Kanalabstand der Abstand von einer der Kanalwände eines Kanals zur gleichen Kanalwand eines benachbarten Kanals verstanden. Mit anderen Worten: Der Kanalabstand entspricht der Summe aus Kanalbreite eines Kanals und der Stegbreite eines an diesen Kanal angrenzenden Steges.

Bevorzugt ist die Kanalstruktur zur Anpassung an eine lokale Gaszusammensetzung derart ausgeführt, dass die Kanal- und/oder Stegbreiten entlang der Strömungsrichtung der Fluide variieren.

zweckmäßigerweise können zur Anpassung der Kanalstruktur an lokale Gaszusammensetzungen in den Kanälen die Kanalbreite, die Stegbreite und/oder die Kanalabstände entlang der Strömungsrichtung und/oder die Kanalbreite und/oder die Stegbreite am Fluideingang und/oder am Fluidausgang variieren oder eine beliebige Kombination dieser unterschiedlich variierenden Breiten bzw. Abständen vorgesehen sein. Durch eine derartige Variation von Kanalbreiten, Stegbreiten und/oder Kanalabständen, welche an lokale Gaszusammensetzungen, Wärme- und/oder Ladungstransport, insbesondere an lokale Sauerstoffkonzentrationen angepasst sind, ist auch ein Einfluss auf das Wassermanagement in der Brennstoffzelle ermöglicht. So ist mittels breiterer Stege am Fluideingang ein höherer Wasserrückhalt in der Elektrolytmembran (PEM) ermöglicht. Schmale Kanäle am Fluideingang ermöglichen eine im Mittel geringere Temperaturdifferenz zwischen der Elektrolytmembran und einem Kühlmedium, so dass ein optimaler Wasserhaushalt bei trockenen Eingangsfluiden, insbesondere Eingangsgasen, ermöglicht ist. Am Fluidausgang ist aufgrund von entstandenem Produktwasser die Fluid-, insbesondere Gasfeuchte erhöht, so dass hier schmalere Stegen und breitere Kanäle bevorzugt sind.

Für einen optimalen Fluidtransport mit breiten Kanälen und einen gleichzeitig optimalen Wärme- und Ladungstransport mit breiten Stegen und somit für widersprechende Parameter über die gesamte Länge der Kanäle und Stege ist erfindungsgemäß vorgesehen, dass am Fluideingang die Kanäle schmaler und die Stege breiter und die Kanalabstände (d.h. die Summe aus der Kanalbreite eines Kanals und der Stegbreite eines an den betreffenden Kanal angrenzenden Steges) kleiner als am Fluidausgang ausgebildet sind. Durch eine derartige Ausbildung der Kanäle und Stege werden ein sich ändernder Partialdruck und eine sich ändernde Konzentration der Edukte innerhalb der Brennstoffzelle infolge des Eduktverbrauchs (= Sauerstoffverbrauch an der Kathode) und der Produktentstehung (= Wasserdampf an der Kathode) berücksichtigt. Insbesondere wird berücksichtigt, dass die Sauerstoffkonzentration zum Fluidausgang hin abnimmt und somit die Verluste durch einen schlechteren Fluidtransport steigen. Damit verändert sich auch das Verhältnis von Fluidtransport zu Ladungstransportverlust, was wiederum zu einem veränderten Optimum von Kanal- und Stegbreite führt.

Denkbar ist auch, dass bei konstanter Stegbreite die Kanalbreite entlang der Strömungsrichtung vom Fluideingang zum Fluidausgang zunimmt. Dies ermöglicht einen optimalen Fluid- oder Stofftransport von und zur Katalysatorschicht.

Alternativ dazu ist auch denkbar, dass bei konstanter Kanalbreite die Stegbreite entlang der Strömungsrichtung vom Fluideingang zum Fluidausgang zunimmt, wodurch ein verbesserter Ladungs- und Wärmetransport insbesondere bei flexiblen Lagen von Gasdiffusionselektroden ermöglicht ist.

Ferner kann es vorteilhaft sein, wenn bei konstanter Kanalbreite die Stegbreite entlang der Strömungsrichtung vom Fluideingang zum Fluidausgang abnimmt, um einen verbesserten Ladungs- und Wärmetransport insbesondere bei flexiblen Lagen von Gasdiffusionselektroden zu ermöglichen.

Für eine einfache und kostengünstig herstellbare Brennstoffzellen-Bipolarplatte mit einer möglichst homogenen Fluidzufuhr ist vorgesehen, dass alle Kanäle von einem gemeinsamen Fluideingang abgehen. Dabei ist dem Fluideingang je nach zugehöriger Elektrode als Fluid ein gasförmiger Reaktions- oder Brennstoff, z. B. Wasserstoff oder ein Wasserstoff enthaltendes Gas, oder ein Oxidationsmittel, z. B. Sauerstoff oder ein Sauerstoff enthaltendes Gas, z. B. Luft, zuführbar. Analog hierzu münden zweckmäßigerweise alle Kanäle in einen gemeinsamen Fluidausgang, über welchen als Reaktionsprodukte Wasser oder Wasserdampf und/oder ein Restbrenngas abführbar sind.

Für einen möglichst robusten Aufbau und eine einfache Einbringung der Kanalstruktur sind die beiden Platten aus Metall. Dabei kann die Kanalstruktur in die jeweilige Platte durch Formrecken, Tiefziehen, Fließpressen oder dergleichen, oder kontinuierlich durch Walzen oder Ziehen eingebracht werden.

Hinsichtlich der Brennstoffzellenanordnung mit mehreren gestapelten Brennstoffzellen, die als Membran-Elektroden-Anordnung mit einer zwischen zwei Gasdiffusionselektroden angeordneten Elektrolytmembran ausgebildet sind, ist vorgesehen, dass zwischen zwei Brennstoffzellen jeweils eine erfindungsgemäße Brennstoffzellen-Bipolarplatte angeordnet ist.

Bevorzugt wird die erfindungsgemäße Brennstoffzellen-Bipolarplatte in einer Brennstoffzellenanordnung verwendet. Dabei kann es sich bei der Brennstoffzellenanordnung um eine Anzahl von gestapelten Polymer-Elektrolyt-Membran-Brennstoffzellen handeln, zwischen denen jeweils eine Brennstoffzellen-Bipolarplatte angeordnet ist.

Ausführungsbeispiele der Erfindung werden anhand von Zeichnungen näher erläutert.

Dabei zeigen:
- Fig. 1: schematisch einen typischen Aufbau einer Brennstoffzellenanordnung mit einer einzelnen von mehreren planparallel gestapelten Brennstoffzellen, die jeweils außenseitig von jeweils einer Bipolarplatte begrenzt sind,
- Fig. 2: schematisch eine herkömmliche Ausführungsform für eine Kanalstruktur auf einer der Außenseiten einer Bipolarplatte mit konstanter Stegbreite und variierender Kanalbreite,
- Fig. 3: schematisch eine weitere herkömmliche Ausführungsform für eine Kanalstruktur auf einer der Außenseiten einer Bipolarplatte mit variierender Stegbreite und konstanter Kanalbreite,
- Fig. 4: schematisch eine weitere herkömmliche Ausführungsform für eine Kanalstruktur auf einer der Außenseiten einer Bipolarplatte mit variierender Stegbreite und variierender Kanalbreite,
- Fig. 5: schematisch eine erfindungsgemäße Ausführungsform für eine Kanalstruktur auf einer der Außenseiten einer Bipolarplatte mit variierender Stegbreite und variierender Kanalbreite.

Einander entsprechende Teile sind in allen Figuren mit den gleichen Bezugszeichen versehen.

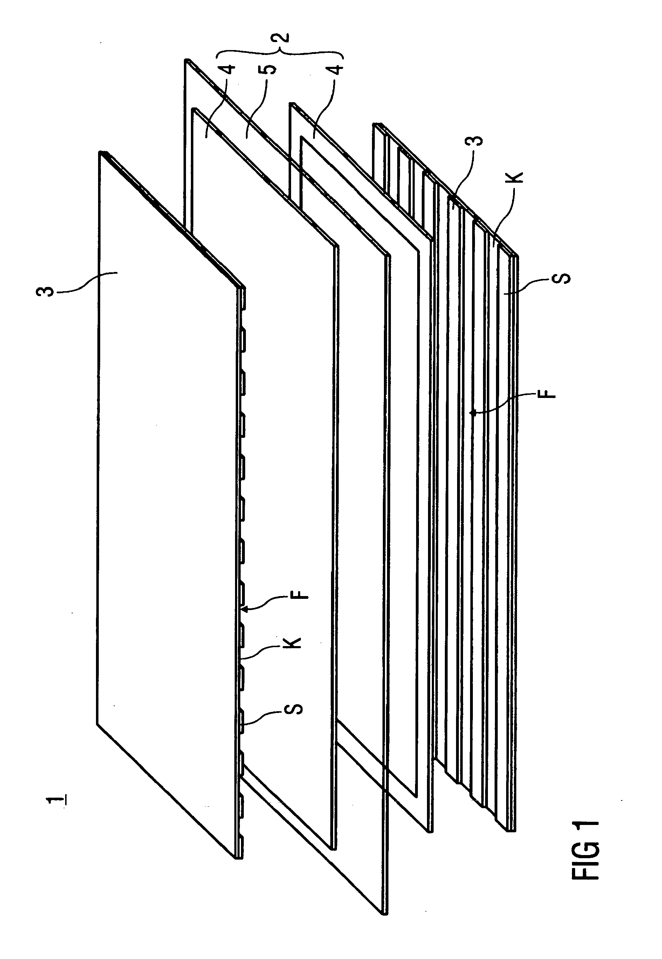

Figur 1 zeigt schematisch einen typischen Aufbau einer Brennstoffzellenanordnung 1 mit einer einzelnen von mehreren planparallel gestapelten Brennstoffzellen 2 (auch Membran-Elektroden-Anordnung, kurz MEA, genannt), die jeweils außenseitig von jeweils einer Brennstoffzellen-Bipolarplatte 3 begrenzt sind.

Dabei zeigt die Figur 1 zur besseren Verständlichkeit die Orientierung der einzelnen Elemente - Brennstoffzelle 2 (bzw. MEA) und Brennstoffzellen-Bipolarplatten 3 - und deren Oberflächen zueinander.

Bei der Brennstoffzelle 2 kann es sich insbesondere um eine so genannte PEM-Brennstoffzelle handeln (mit PEM = Polymer-Elektrolyt-Membran). Dazu umfasst die Brennstoffzelle 2 zwei Gasdiffusionselektroden 4 (eine davon als Anode, die andere als Kathode) und einen dazwischen angeordneten Elektrolyt 5, z. B. eine Polymer-Elektrolyt-Membran. Eine der Oberflächen der jeweiligen Gasdiffusionselektrode 4 ist dabei dem Elektrolyt 5, z. B. der Polymer-Elektrolyt-Membran, und die andere Oberfläche einer der Brennstoffzellen-Bipolarplatten 3 zugewandt.

Die Brennstoffzellen-Bipolarplatte 3 ist bevorzugt aus mindestens einer Platte oder aus zwei planparallel zueinander angeordneten Platten gebildet, wobei die Platten aus einem Metall sind und beispielsweise dünne Metallbleche sind, was einen robusten Aufbau und eine einfache Einbringung der Kanalstruktur in die beiden Platten ermöglicht. Die beiden Platten können prinzipiell aber auch aus Kohlenstoff oder einem Kohlenstoffwerkstoff (Karbon) gebildet sein. Derartige Platten können heutzutage sehr dünnwandig hergestellt werden und haben den Vorteil, dass sie nicht beschichtet werden müssen.

In mindestens eine Außenseite der Platte oder einer der Platten oder beider Platten sind Kanäle K und Stege S eingebracht, z. B. durch Hohlprägen (mit Form und Stempel), Hydroforming (mit Form und Flüssigkeit), Hochgeschwindigkeitsumformen (mit Form und Stempel), Formrecken, Tiefziehen, Fließpressen oder dergleichen, oder kontinuierlich durch Walzen oder Ziehen. Die Brennstoffzellen-Bipolarplatte 3 kann somit ein Formteil sein, das z. B. aus einem oder zwei dünnen Metallblechen gebildet ist, welche/s Erhebungen (= Stege S) und Vertiefungen (= Kanäle K) aufweisen, die zur Außenseite, d. h. zur jeweils zugehörigen Membran-Elektroden-Anordnung, ein Strömungsfeld F mit den Kanälen K bilden.

Im Betrieb der Brennstoffzelle werden die Kanäle K des jeweiligen Strömungsfelds F von einem Fluid durchströmt, ein Anoden-Strömungsfeld von einem Brennstoff, z. B. Wasserstoff, und ein Kathoden-Strömungsfeld von einem Oxidationsmittel, z. B. Sauerstoff oder Luft.

In Figur 1 ist nur ein Teil der Brennstoffzellenanordnung 1 - eine Brennstoffzelle 2 mit zwei außenseitig angrenzenden Brennstoffzellen-Bipolarplatten 3 - dargestellt. In nicht näher dargestellter Art und Weise grenzen außenseitig an die jeweilige Brennstoffzellen-Bipolarplatte 3 weitere nicht näher dargestellte Brennstoffzellen 2, insbesondere deren Membran-Elektroden-Anordnung, planparallel an.

Zwischen zwei Platten einer Brennstoffzellen-Bipolarplatte 3 können darüber hinaus innenseitig durch Negativstrukturen der äußeren Kanalstrukturen mindestens ein nicht näher dargestellter Kühlmittelkanal und/oder ein Zudosierungskanal gebildet sein. Dabei sind eine als Anode fungierende Platte und eine als Kathode fungierende Platte beispielsweise derart an Kanalboden aufeinander gelegt, dass deren Seitenwände und Stege innen liegende Kühlmittelkanäle und/oder Zudosierungskanäle bilden.

Um Transportverluste, Kontakt- und/oder Materialwiderstände sowie Fluid- oder Gas-, Wärmetransport- und/oder Ladungstransportverluste zu vermeiden oder zumindest zu reduzieren, weisen die Kanäle K und die Stege S jeweils eine zugehörige variierende Kanalbreite b1 bzw. Stegbreite b2 und/oder einen variierenden Kanalabstand a auf. Erfindungsgemäß sind die Kanalbreite b1, die Stegbreite b2 und/oder der Kanalabstand a derart variierend ausgebildet, dass diese an lokale Anforderungen an Gas-, Wärme- und Ladungstransport angepasst sind.

Unter dem Kanalabstand a wird dabei insbesondere der Abstand zwischen einer Kanalwand eines Kanals und der gleichen Kanalwand eines zu diesem Kanal benachbart angeordneten Kanals verstanden. Somit entspricht der Kanalabstand a der Summe aus Kanalbreite b1 eines Kanals K und der Stegbreite b2 eines angrenzenden Steges S.

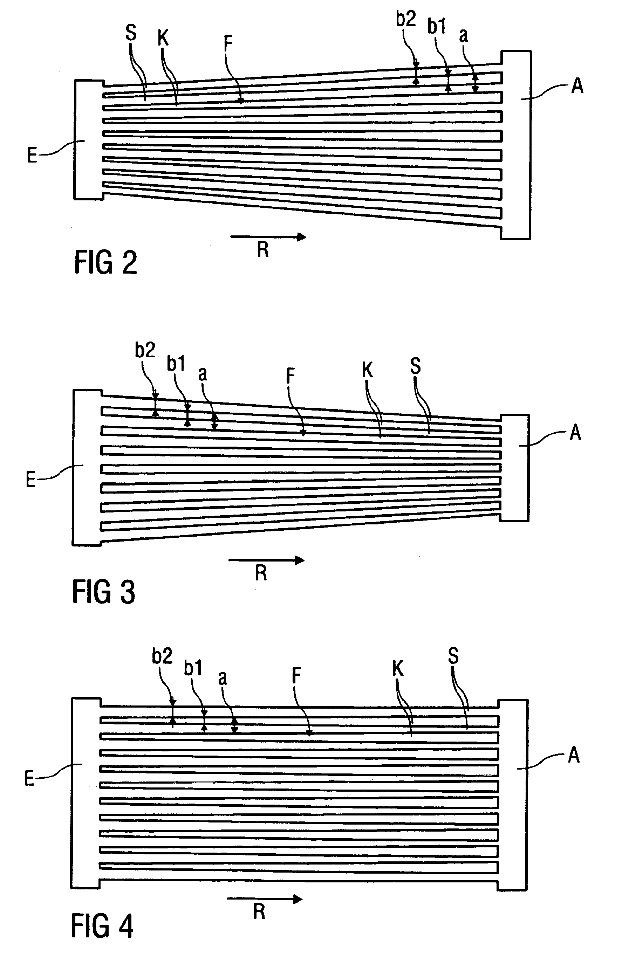

Figur 2 zeigt schematisch eine herkömmliche Ausführungsform für eine Kanalstruktur auf einer der Außenseiten einer der Platten einer Brennstoffzellen-Bipolarplatte 3.

Hierbei sind die Kanäle K und die Stege S derart ausgebildet, dass die Stege S entlang einer Strömungsrichtung R eine konstante Stegbreite b2 aufweisen. Die Kanalbreite b1 der Kanäle K hingegen variiert derart, dass die Kanalbreite b1 in Strömungsrichtung R zunimmt.

Darüber hinaus nimmt korrespondierend zur Zunahme der Kanalbreite b1 der Kanalabstand a ebenfalls zu.

Alle Kanäle K gehen zweckmäßigerweise von einem gemeinsamen Fluideingang E ab und münden in einen gemeinsamen Fluidausgang A. Je nach Art des zugehörigen Strömungsfeldes F, Anoden-Strömungsfeld oder Kathoden-Strömungsfeld, wird über den Fluideingang E ein Brennstoff, z. B. Wasserstoff, oder ein Oxidationsmittel, z. B. Sauerstoff oder Luft, zugeführt.

Alternativ können auch mehrere Fluideingänge E und Fluidausgänge A vorgesehen sein.

Figur 3 zeigt schematisch eine weitere herkömmliche Ausführungsform für eine Kanalstruktur auf einer der Außenseiten einer Brennstoffzellen-Bipolarplatte 3.

In diesem Ausführungsbeispiel variiert bei konstanter Kanalbreite b1 die Stegbreite b2. Daraus resultierend variiert auch der Kanalabstand a. Die Stegbreite b2 nimmt in Strömungsrichtung R gesehen bevorzugt ab. Somit nimmt auch der Kanalabstand a in Strömungsrichtung R ab.

Figur 4 zeigt schematisch eine weitere herkömmliche Ausführungsform für eine Kanalstruktur auf einer der Außenseiten einer der Platten einer Brennstoffzellen-Bipolarplatte 3.

In diesem Ausführungsbeispiel variieren die Stegbreite b1 und die Kanalbreite b2.

Dabei nimmt die Kanalbreite b1 gleich stark zu wie die Stegbreite b2 abnimmt, so dass der Kanalabstand a über die gesamte Länge des Strömungsfeldes F konstant ist.

Gemäß Figur 4 sind die Kanäle K schmaler und die Stege S breiter am Fluideingang E und am Fluidausgang A sind die Kanäle K breiter und die Stege S schmaler.

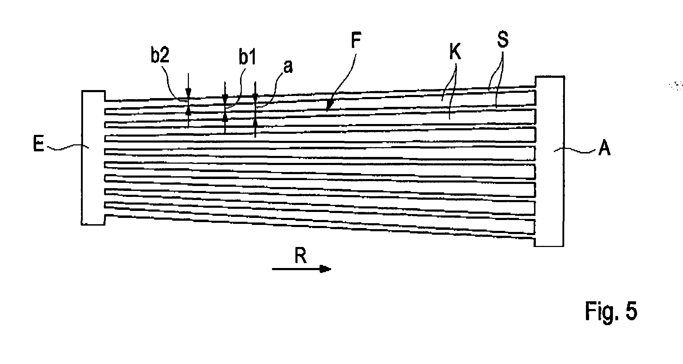

Figur 5 zeigt schematisch eine erfindungsgemäße Ausführungsform für eine Kanalstruktur auf einer der Außenseiten einer der Platten einer Brennstoffzellen-Bipolarplatte 3.

In diesem Ausführungsbeispiel variieren die Stegbreite b1 und die Kanalbreite b2 und der Kanalabstand a.

Dabei nimmt die Kanalbreite b1 stärker zu als die Stegbreite b2 abnimmt, so dass der Kanalabstand a über die gesamte Länge des Strömungsfeldes F nicht konstant ist, sondern zunimmt.

Gemäß Figur 5 sind am Fluideingang E die Kanäle K schmaler, die Stege S breiter und die Kanalabstände a kleiner ausgebildet. Am Fluidausgang A sind die Kanäle K breiter, die Stege S schmaler und die Kanalabstände a größer.

Je nach Vorgabe können die Kanalbreite b1 der Kanäle K und die Stegbreite b2 der Stege S beispielsweise zumindest um eine Hälfte der jeweiligen Breite b1 bzw. b2 und somit das Anderthalbfache oder höchstens das Vierfache zu- bzw. abnehmen. Die Kanalbreiten liegen dabei vorzugsweise im Bereich von 0,4 bis 2,0 mm. Die Stegbreiten liegen vorzugsweise im Bereich von 0,3 bis 3,0 mm. Bevorzugte Verhältnisse zwischen Kanalbreiten und Stegbreiten liegen in folgendem Bereich: Kanalbreite = 0,8 bis 1,2 mm zu Stegbreite = 0,5 bis 1,0 mm.

Ferner wird sichergestellt, dass bei Variation der Kanal- und/oder Stegkonturen und/oder -abmessungen die Gesamthöhe und somit die Dicke der Bipolarplatte 3 gleich bleibt.

## Patentansprüche

1. Brennstoffzellen-Bipolarplatte (3), insbesondere zur Anordnung zwischen zwei benachbarten Membran-Elektroden-Anordnungen, mit mindestens einer oder zwei planparallel zueinander angeordneten Platten, wobei zumindest auf einer oder beiden Außenseiten jeweils ein Strömungsfeld (F) durch in die jeweilige Platte eingebrachte Kanalstrukturen mit mehreren zwischen einem Fluideingang (E) und einen Fluidausgang (A) verlaufenden Kanälen (K) und zwischen zwei Kanälen (K) verlaufenden Stegen (S) gebildet ist,
wobei die Kanäle (K) und/oder die Stege (S) auf mindestens einer der Außenseiten entlang einer Strömungsrichtung (R) eines Fluids zwischen Fluideingang (E) und Fluidausgang (A) zumindest eine variierende Kanalbreite (b1), eine variierende Stegbreite (b2) und/oder eine variierende Summe (a) aus der Kanalbreite (b1) eines Kanals und der Stegbreite (b2) eines an den betreffenden Kanal angrenzenden Steges aufweisen,
und wobei dem Fluideingang (E) als Fluid ein gasförmiger Brennstoff oder ein gasförmiges Oxidationsmittel zuführbar ist,
**dadurch gekennzeichnet, dass** am Fluideingang (E) die Kanäle (K) schmaler und die Stege (S) breiter und die Summe (a) kleiner als am Fluidausgang (A) ausgebildet sind.

2. Brennstoffzellen-Bipolarplatte (3) nach Anspruch 1,
**dadurch gekennzeichnet, dass** die Kanäle (K) entlang der Strömungsrichtung (R) eine zunehmende Kanalbreite (b1) aufweisen.

3. Brennstoffzellen-Bipolarplatte (3) nach Anspruch 1 oder 2,
**dadurch gekennzeichnet, dass** die Stege (S) entlang der Strömungsrichtung (R) eine abnehmende Stegbreite (b2) aufweisen.

4. Brennstoffzellen-Bipolarplatte (3) nach einem der vorhergehenden Ansprüche,
**dadurch gekennzeichnet, dass** die Summe (a) zwischen zwei nebeneinander angeordneten Kanälen (K) entlang der Strömungsrichtung (R) zunimmt.

5. Brennstoffzellen-Bipolarplatte (3) nach einem der vorhergehenden Ansprüche,
**dadurch gekennzeichnet, dass** alle Kanäle (K) von einem gemeinsamen Fluideingang (E) abgehen.

6. Brennstoffzellen-Bipolarplatte (3) nach einem der vorhergehenden Ansprüche,
**dadurch gekennzeichnet, dass** alle Kanäle (K) in einen gemeinsamen Fluidausgang (A) münden.

7. Brennstoffzellen-Bipolarplatte (3) nach einem der vorhergehenden Ansprüche,
**dadurch gekennzeichnet, dass** die Platten aus Metall sind.

8. Brennstoffzellenanordnung (1) mit mehreren gestapelten Brennstoffzellen (2), die als Membran-Elektroden-Anordnung mit einer zwischen zwei Gasdiffusionselektroden (4) angeordneten Elektrolytmembran (5) ausgebildet sind und zwischen denen jeweils eine Brennstoffzellen-Bipolarplatte (3) nach einem der Ansprüche 1 bis 7 angeordnet ist.

9. Brennstoffzellenanordnung (1) nach Anspruch 8,
**dadurch gekennzeichnet, dass** die Gasdiffusionselektroden (4) aus einer flexiblen, bevorzugt rollbaren Lage gebildet sind.

10. Verwendung einer Brennstoffzellen-Bipolarplatte (3) nach einem der Ansprüche 1 bis 7 in einer Brennstoffzellenanordnung (1) aus einer Anzahl von gestapelten Polymer-Elektrolyt-Membran-Brennstoffzellen (2), zwischen denen die Brennstoffzellen-Bipolarplatte (3) angeordnet ist.

## Claims

1. Fuel cell bipolar plate (3), in particular for location between two adjacent membrane electrode arrangements, comprising at least one plate or two plates arranged plane-parallel relative to one another, wherein a flow field (F) is formed on at least one outside or on two outsides by means of passage structures which are provided in the respective plate and comprise a plurality of passages (K) extending between a fluid inlet (E) and a fluid outlet (A) and webs (S) extending between two passages (K),
wherein the passages (K) and/or the webs (S) have on at least one of the outsides along a flow direction (R) between the fluid inlet (E) and the fluid outlet (A) at least one varying passage width (b1), a varying web width (b2) and/or a varying sum (a) of the passage width (b1) of a passage and the web width (b2) of a web adjoining the respective passage,
and wherein a gaseous fuel or a gaseous oxidant can be supplied to the fluid inlet (E) as a fluid,
**characterised in that** the passages (K) are narrower and the webs (S) are wider and the sum (a) is less at the fluid inlet (E) than at the fluid outlet (A).

2. Fuel cell bipolar plate (3) according to claim 1,
**characterised in that** the passages (K) have an increasing passage width (b1) along the flow direction (R).

3. Fuel cell bipolar plate (3) according to claim 1 or 2,
**characterised in that** the webs (B) have a decreasing web width (b2) along the flow direction (R).

4. Fuel cell bipolar plate (3) according to any of the preceding claims,
**characterised in that** the sum (a) between two adjoining passages (K) increases along the flow direction (R).

5. Fuel cell bipolar plate (3) according to any of the preceding claims,
**characterised in that** all passages (K) start from a common fluid inlet (E).

6. Fuel cell bipolar plate (3) according to any of the preceding claims,
**characterised in that** all passages (K) terminate into a common fluid outlet (A).

7. Fuel cell bipolar plate (3) according to any of the preceding claims,
**characterised in that** the plates are made of metal.

8. Fuel cell assembly (1) comprising a plurality of stacked fuel cells (2), which are designed as membrane electrode arrangements with an electrolyte membrane (5) each located between two gas diffusion electrodes (4), and between which a fuel cell bipolar plate (3) according to any of claims 1 to 7 is arranged.

9. Fuel cell assembly (1) according to claim 8,
**characterised in that** the gas diffusion electrodes (4) are represented by a flexible, preferably rollable, layer.

10. Use of a fuel cell bipolar plate (3) according to any of claims 1 to 7 in a fuel cell assembly (1) made up from a number of stacked polymer electrolyte membrane fuel cells (2), between which the fuel cell bipolar plate (3) is arranged.

## Revendications

1. Plaque biplaire (3) pour piles à combustible, notamment destinée à être disposée entre deux agencements électrode - membrane voisins, dotée d'au moins une ou deux plaques disposées dans un plan parallèle entre elles, au moins sur l'une ou sur les deux faces externes à chaque fois un champ d'écoulement (F) est conçu dans des structures de canal insérées dans chaque plaque comportant plusieurs canaux (K) s'étendant entre une entrée de fluide (E) et une sortie de fluide (A) et entre deux nervures (S) s'étendant entrre deux canaux (K), les canaux (K) et/ou les nervures (S) présentant sur au moins l'une des faces externes le long d'une direction d'écoulement (R) d'un fluide entre l'entrée de fluide (E) et la sortie de fluide (A) au moins une largeur de canal variable (b1), une largeur de nervure variable (b2) et/ou une somme variable (a) à partir de la largeur de canal (b1) d'un canal et de la largeur de nervure (b2) d'une nervure adjacent au canal concerné, et un combustible gazeux ou un agent d'oxydation gazeux étant prévu comme fluide pour alimenter l'entrée de fluide (E), **caractérisée en ce qu'**au niveau de l'entrée de fluide (E) les canaux (K) sont plus étroits et les nervures (S) sont plus larges et la somme (a) est inférieure à celle au niveau de la sortie de fluide (A).

2. Plaque bipolaire (3) pour piles à combustible selon la revendication 1, **caractérisée en ce que** les canaux (K) présentent le long de la direction d'écoulement (R) une largeur de canal croissante (b1).

3. Plaque bipolaire (3) pour piles à combustible (3) selon la revendication 1 ou la revendication 2, **caractérisée en ce que** les nervures (S) présentent le long de la direction d'écoulement (R) une largeur de nervure décroissante (b2).

4. Plaque bipolaire (3) pour piles combustible selon l'une quelconque des revendications précédentes, **caractérisée en ce que** la somme (a) entre deux canaux (K) adjacents augmente le long de la direction d'écoulement (R).

5. Plaque bipolaire (3) pour piles à combustible selon l'une quelconque des revendications précédentes, **caractérisée en ce que** tous les canaux (K) débutent à partir d'une entrée de fluide commune (E).

6. Plaque bipolaire (3) pour piles à combustible selon l'une quelconque des revendications précédentes, **caractérisée en ce que** tous les canaux (K) débouchent dans une sortie de fluide commune (A).

7. Plaque bipolaire (3) pour piles à combustible selon l'une quelconque des revendications précédentes, **caractérisée en ce que** les plaques sont métalliques.

8. Agencement (1) de piles à combustible doté de plusieurs piles à combustible empilées (2) qui sont conçues en tant qu'agencement électrodes - membrane comportant une membrane d'électrolyte disposée entre deux électrodes (4) de diffusion gazeuse et une plaque bipolaire (3) pour pile à combustible est disposée à chaque fois entre elles selon l'une quelconque des revendications 1 à 7.

9. Agencement (1) de piles à combustible selon la revendication 8, **caractérisé en ce que** les électrodes (4) de diffusion gazeuse sont conçues à partir d'une couche souple, de préférence pouvant être enroulée.

10. Utilisation d'une plaque bipolaire (3) pour piles à combustible selon l'une quelconque des revendications 1 à 7 dans un agencement (1) de piles à combustible à partir d'un nombre de piles à combustible (2) à membrane d'électrolyte en polymère empilées entre lesquelles est disposée la plaque bipolaire (3) pour piles à combustible.
